# EUROPEAN PATENT APPLICATION

(11) **EP 4 624 373 A1**
(43) Date of publication of application: **01.10.2025**
(21) Application number: 24167717.8
(22) Date of filing: 28.03.2024
(51) Int. Cl.: B65G 1/04

(54) **A LIFTING DEVICE**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a lifting device for lifting a multi-container frame and for lifting a storage container arranged in an interior space of the multi-container frame, the multi-container frames configured to be stored in storage columns of an automated storage and retrieval system, the multi-container frames configured to accommodate a plurality of storage containers stored in an interior space of each multi-container frame, the lifting device comprising: a first lifting frame configured to engage with a multi-container frame; and a second lifting frame configured to engage with a storage container arranged within a multi-container frame.

## Description

### TECHNICAL FIELD

The disclosure relates to a lifting device. More particularly, it relates to a lifting device for lifting a multi-container frame and for lifting a storage container, in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robotic container-handling vehicles are central to the efficient operation of an automated storage and retrieval system. Developments in the design and operation of such robots can significantly improve the operation of automated storage and retrieval systems. In order to handle containers, a robotic container-handling vehicle must be able to lift containers from the grid, and return containers to the grid using a lifting device configured to engage containers. It would be advantageous to improve the design of such robots.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 show a portion of the grid of Fig. 1 containing multi-container frames;
Fig. 6A shows a perspective view of two example multi-container frames;
Fig. 6B shows a side-on view of the example multi-container frames;
Fig. 6C shows a top-down view of the example multi-container frames;
Fig. 7A shows a cut-out view of an example multi-container frame, from which a first arrangement of containers stored within the multi-container frame is visible;
Fig. 7B shows a cut-out view of the example multi-container frame, from which a second arrangement of containers stored within the multi-container frame is visible;
Fig. 8A shows an example lifting device of a container-handling vehicle that is configured to couple to a multi-container frame to enable the multi-container frame to be lifted or lowered by the container-handling vehicle;
Fig. 8B shows a side-on view of the arrangement of Fig. 8A;
Fig. 8C shows the lifting device of Figs. 8A and 8B engaged with a multi-container frame;
Fig. 8D shows a side-on view of the arrangement of Fig. 8C;
Fig. 9 shows the example lifting device of Figs. 8A-D being lowered into contact with the multi-container frame;
Fig. 10 shows the example lifting device of Figs. 8A-D engaged with the multi-container frame;
Fig. 11 shows an example lifting device of a container-handling vehicle that is configured to couple to a container held within a multi-container frame to enable the container to be lifted or lowered by the container-handling vehicle;
Fig. 12 shows a robotic container-handling vehicle lifting a container out of a multi-container frame;
Fig. 13A shows an example lifting device comprising a first lifting frame and a second lifting frame and configured to be coupled to a single lifting frame displacement device via the second lifting frame;
Fig. 13B shows the lifting device of Fig. 13A positioned above a multi-container frame containing storage containers;
Fig. 13C shows the lifting device of Fig. 13A lifting a storage container from within a multi-container frame;
Fig. 14A shows an example lifting device engaging with recesses of a multi-container frame;
Fig. 14B shows the lifting device of Fig. 14A engaging with a multi-container frame and a storage container within the multi-container frame;
Fig. 14C shows the lifting device of Fig. 14A lifting a storage container from within a multi-container frame;
Fig. 15A shows an example lifting device comprising actuators provided on the second lifting frame when viewed from below;
Fig. 15B shows the lifting device of Fig. 15A when viewed from above;
Fig.15C shows the mechanical coupling between the actuators of the second lifting frame of Fig. 15A and the latches of the first lifting frame of Fig. 15A when the actuator is not actuated;
Fig. 15D shows the mechanical coupling between the actuators of the second lifting frame of Fig. 15A and the latches of the first lifting frame of Fig. 15A when the actuator is actuated;
Fig. 16A shows an example lifting device configured to be coupled to two lifting frame displacement devices, the lifting frame in engagement with a multi-container frame;
Fig. 16B shows the lifting device of Fig. 16A in engagement with a multi-container frame and a storage container;
Fig. 16C shows the lifting device of Fig. 16A lifting a storage container within a multi-container frame;
Fig. 17 shows an example lifting device comprising a lifting frame displacement device provided on the first frame and coupled to the second lifting frame;
Fig. 18A shows an example lifting device comprising a first, second and third lifting frame, wherein the second and third lifting frames are positioned side by side to access storage containers within a multi-container frame;
Fig. 18B shows the lifting device of Fig. 18A engaging a storage container within a multi-container frame;
Fig. 18C shows the lifting device of Fig. 18A lifting a storage container from within a multi-container frame;
Fig. 19A shows an example lifting device positioned above a multi-container frame;
Fig. 19B shows the lifting device of Fig. 19A in engagement with a multi-container frame;
Fig. 19C shows the lifting device of Fig 19A lifting a multi-container frame;
Fig. 20A shows an example system comprising a robotic container-handling vehicle and a lifting device of Fig. 13A, positioned above a storage column to lower the lifting device into the storage column to retrieve a storage container;
Fig. 20B shows the system of Fig. 20A having lowered the lifting device into the storage column;
Fig. 20C shows the system of Fig. 20A engaged with a storage container via the lifting device of Fig. 13A;
Fig. 21A shows an example system comprising a crane and a lifting device of Fig. 13A, positioned above a storage column to lower the lifting device into the storage column;
Fig. 21B shows the system of Fig. 21B having lowered the lifting device into the storage column to retrieve a storage container;
Fig. 21C shows the system of Fig. 21A engaged with a storage container via the lifting device of Fig. 13A;
Fig. 22A shows the system of Fig. 21A positioned above a storage column and engaged with a multi-container frame within the storage column, with a telescopic arm extended; and
Fig 22B shows the system of Fig. 22A with the telescopic arm retracted to raise the multi-container frame out of the storage column.

Throughout the description and drawings, like reference numerals refer to like features.

### DETAILED DESCRIPTION

In overview, the disclosure relates to a lifting device comprising a first lifting frame such as a gripping device configured to engage a multi-container frame such as a stacker frame, and a second lifting frame or gripping device configured to engage a storage container located within a stacker frame such as a bin. Advantageously, such a lifting device is able to handle both multi-container frames and storage containers meaning a device to which the lifting frame is attached, such as a robot or crane, can be provided with the ability to lift both multi-container frames and storage containers.

### Automated storage and retrieval system overview

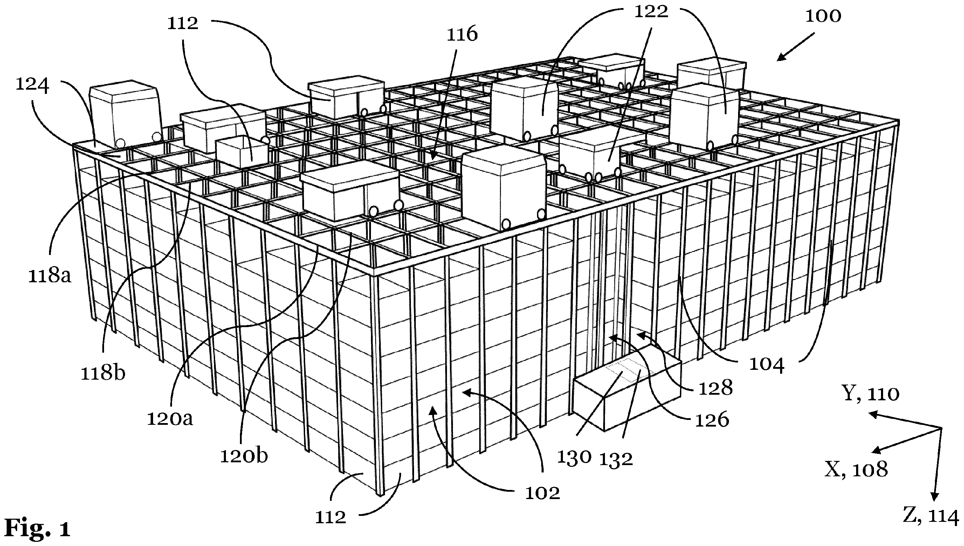

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

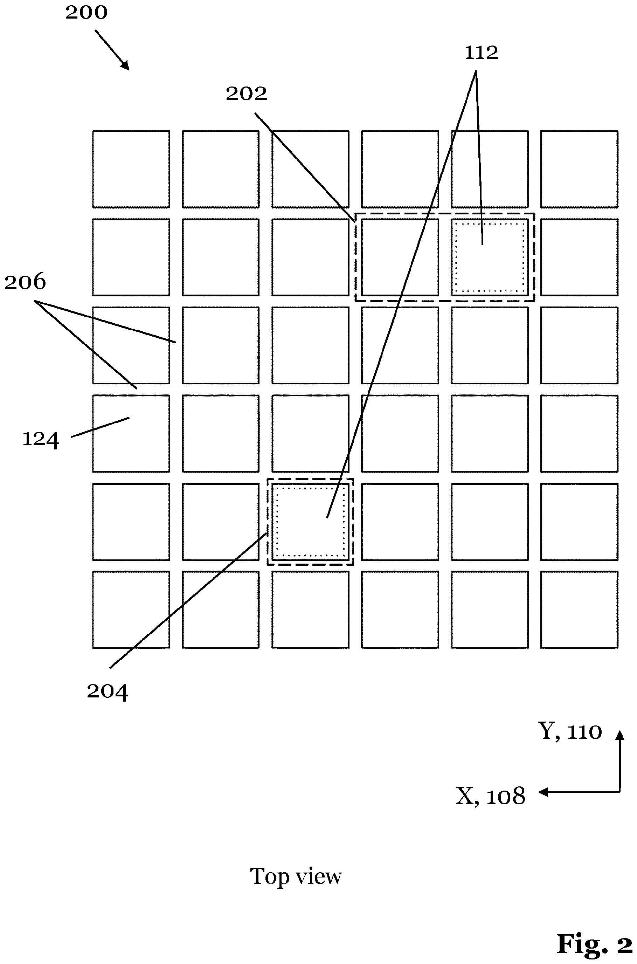

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

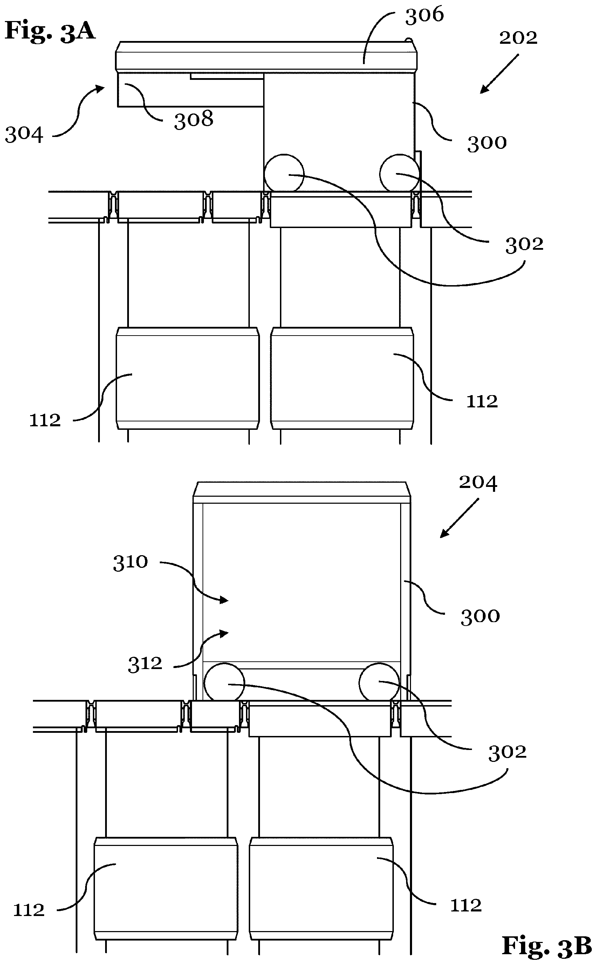

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

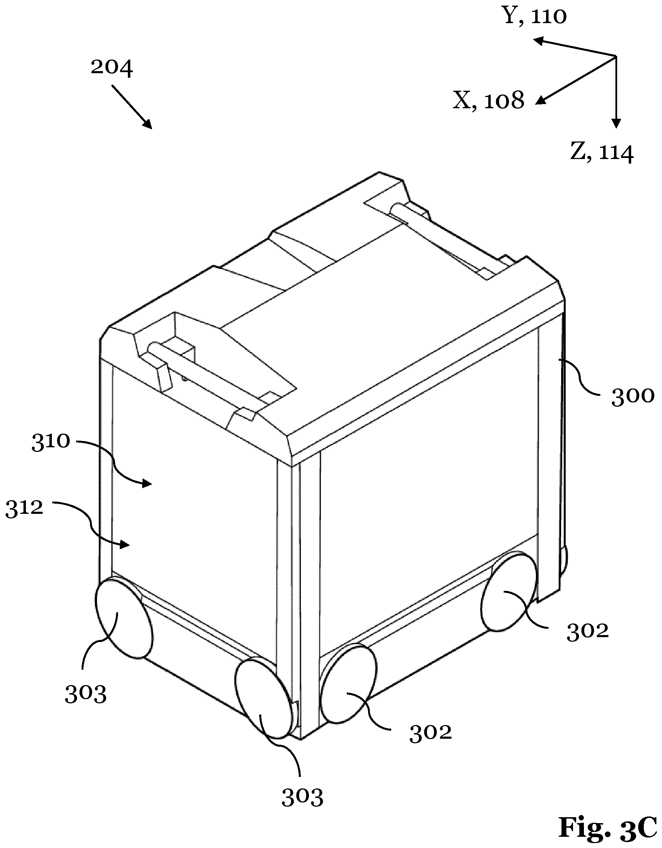

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

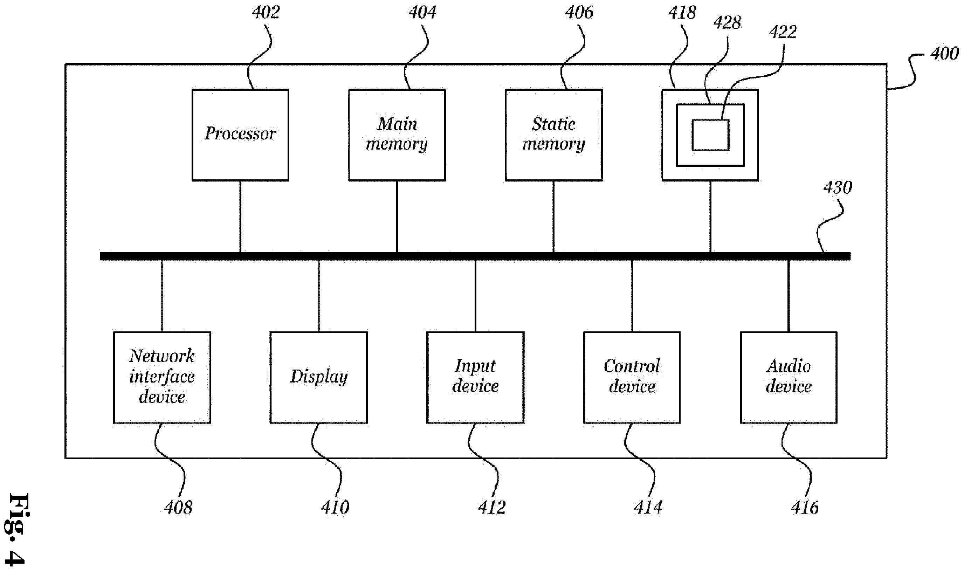

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

The present disclosure relates to multi-container frames, in other words frames or containers that are themselves configured to hold a plurality of other containers. These multi-container frames can be stored and handled in the automated storage and retrieval system of the present disclosure in the same manner as the bins or containers 112 referenced above in relation to Figures 1-4. Accordingly, multi-container frames represent an example implementation of the containers or bins 112 described above and shown in Figs. 1, 2, 3A and 3B. A multi-container frame may be configured to accommodate between two and six containers in a typical implementation, although larger multi-container frames are possible.

In the primary implementation of the present disclosure, the multi-container frames are configured to accommodate a plurality of bins or containers within them, stacked on top of one another. In that case, the multi-container frame may be referred to as a "stacker frame" because the containers held within it are stacked on top of one another. For simplicity, the remainder of this disclosure will focus on this form of multi-container frame. However, it will be appreciate that in other implementations (not shown in the accompanying Figures), the multi-container frame may accommodate a plurality of containers side-by-side or otherwise arranged, and the containers may not be stacked on top of one another within the multi-container frame. Accordingly, while the remainder of this disclosure focuses on stacker frames, this is not to be considered as limiting and the present invention relates to any form of multi-container frame configured to accommodate a plurality of containers within it.

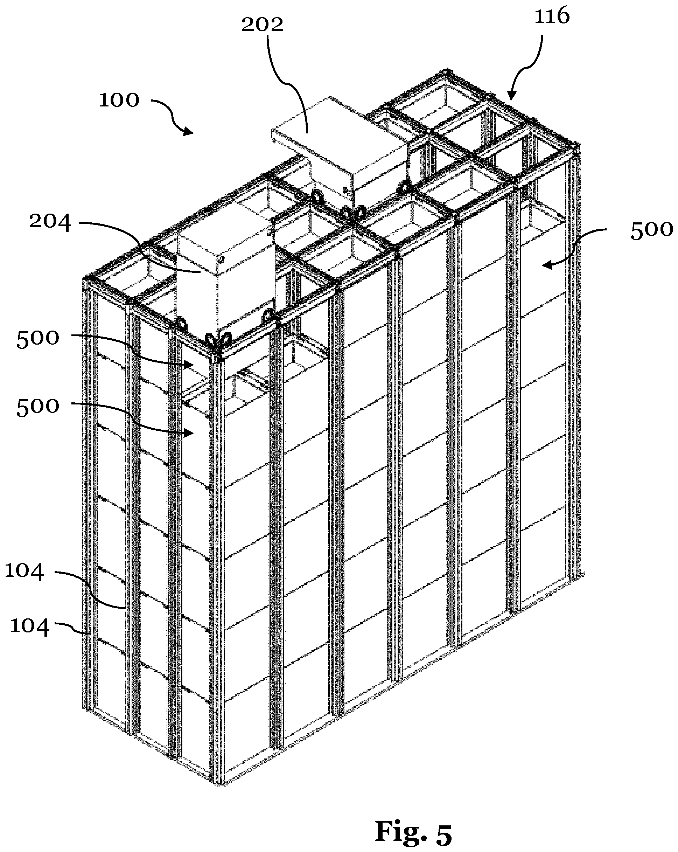

Turning now to Figure 5, this figure shows a subsection of the automated storage and retrieval system shown in Fig. 1. A portion of the grid 100 can be seen together with robotic container-handling vehicles, robotic vehicles, or robots 202, 204 operating on the rail system 116. In the system shown in Figure 5, the containers or bins 112 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame.

As can be seen from Figure 5, one of the stacker frames 500 is in the process of being lifted by robot 204. This is performed in a similar manner as discussed above in relation to the containers 112 of Figure 1. Further details of how stacker frames 500 are lifted will be described below.

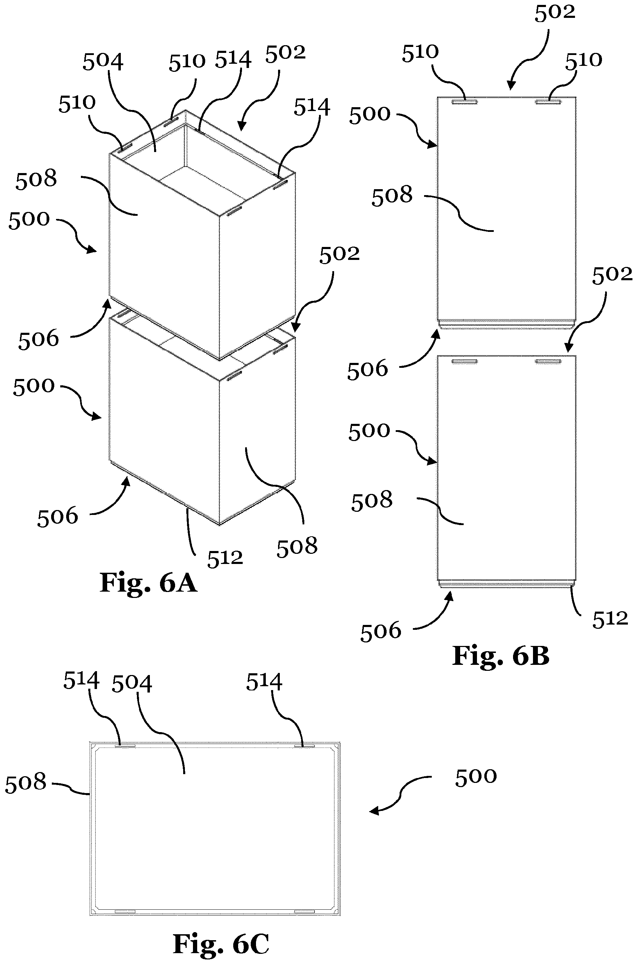

Example stacker frames 500 are shown in more detail in Figs. 6A to 6C. Each of the stacker frames 500 has an open top end 502 for allowing a storage container 504 to pass into the stacker frame 500. As already noted, each stacker frame 500 is configured to accommodate a plurality of storage containers 504 stored one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it. The storage containers 504 stored within stacker frame 500 may correspond to the containers 112 of Figure 1, or may be specially designed containers configured for storing within a stacker frame 500.

Each stacker frame 500, comprises a bottom end 506, for supporting a lowermost storage container 504. In the present example, side walls 508 extend between the bottom end 506 and the top end 502, although in other examples stacker frame 500 may simply comprise a framework defining the frame within which the containers 504 are held and so side walls 508 may be largely omitted.

In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. These recesses enable the stacker frames 500 to be placed into and lifted out of a storage column of the grid, as will be described in further detail below.

To facilitate efficient storage and enable stacker frames 500 themselves to be stacked, the bottom end 506 of each stacker frame 500 may have a recessed portion 512 having an outer periphery being smaller than, i.e. configured to fit within, an inner periphery of the top end 502 of another stacker frame 500. In this manner, the stacker frames 500 may be stacked on top of one another while horizontal movement between them is restricted to improve stability.

As can be seen in the top-down view of a stacker frame 500 in Figure 6C, each storage container 504 held within the stacker frame 500 in this implementation includes connecting recesses 514. These recesses 514 are arranged in the upward facing surface or upper rim of the sidewalls of the storage container 504. These recesses enable the containers 504 to be placed into and lifted out of the stacker frame 500, as will be described in further detail below.

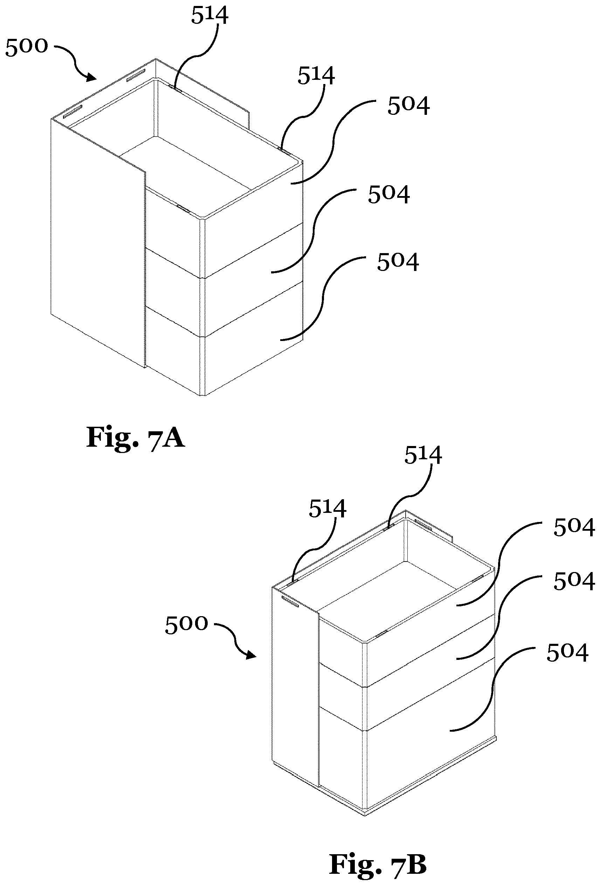

Figs. 7A and 7B show stacker frames 500 with a cut-away section to better illustrate the stacking of the storage containers 504 inside the stacker frame 500. The stacker frame 500 shown in Fig. 7A has three evenly sized storage containers 504, whereas in the stacker frame 500 shown in Fig. 7B the lowermost storage container 504 is larger in height than the other storage containers 504. The number, shape and size of storage containers 504 that can be accommodated within any given stacker frame 500 may vary. As noted above, typically there are between two and six storage containers 504 within a stacker frame 500 when the stacker frame 500 is full.

As noted above, stacker frames 500 can be stored in grid 100 and moved around by container-handling vehicles 202, 204 in a similar manner to ordinary bins or containers 112. A variety of modifications may be made to the container-handling vehicles 202, 204 to enable them to better interact with stacker frames 500 and the containers 504 stored within stacker frames. Some example implementations detailing such modifications will now be described, however it will be appreciated that other mechanisms maybe provided additionally or alternatively.

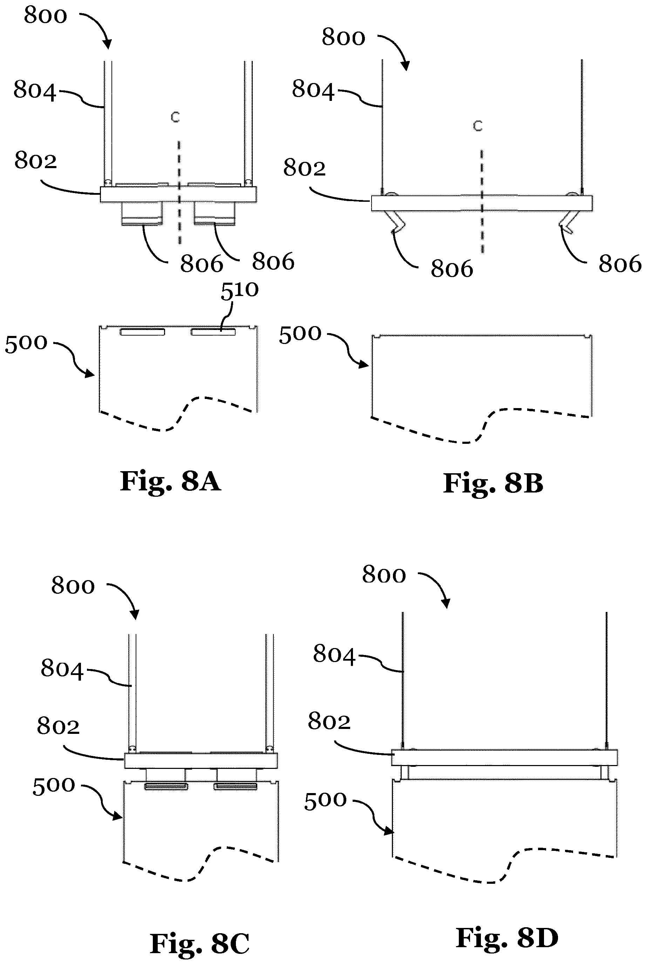

Figs. 8A, 8B, 8C, 8D, 9 and 10 show an example lifting device 800 to enable container-handling vehicles 202, 204 to lift stacker frames 500. The lifting device 800 may be provided as the lifting device 304 of container-handling vehicle 202 or the lifting device 312 of container-handling vehicle 204. It may also be used in the lifting device of any of the robots 1300, 1800 and 1900 described below. The lifting device 800 is configured to engage with a stacker frame 500 such that the stacker frame 500 may be lifted or lowered into or out of a column 102 of the grid 100.

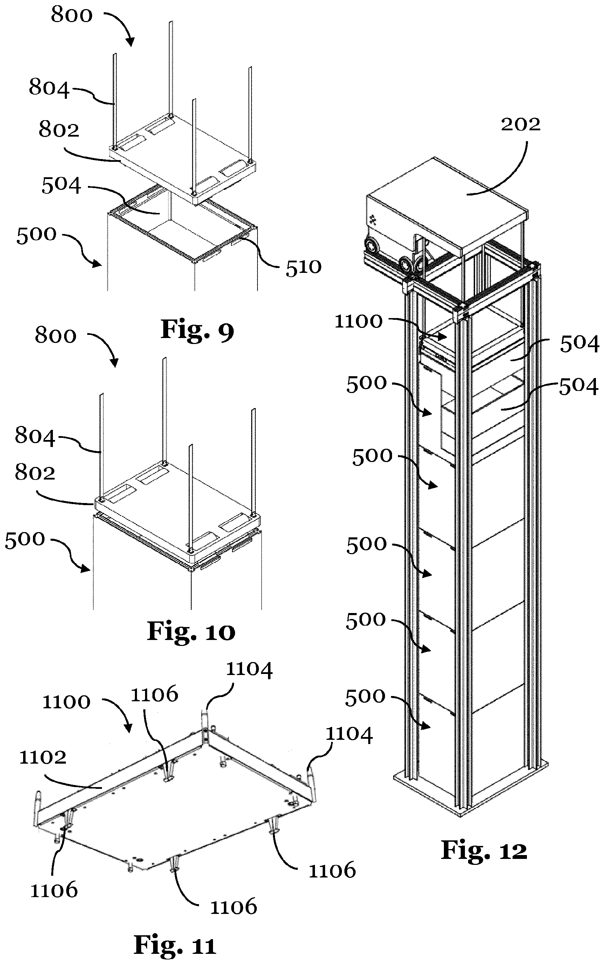

The lifting device 800 in this example comprises a lifting frame 802 connected to lifting bands 804, which are windable/winchable from at least one lifting shaft (not depicted) of the container-handling vehicle 202, 204 to lift or lower the lifting frame 802. The lifting frame 802 comprises a horizontal element, as depicted, and latches 806 arranged on the lifting frame 802. The latches 806 are an example implementation of a gripping device, such as gripping device 308 described above. The latches 806 are configured to move between a release position, as shown in Figs. 8A, 8B and 9, and a connected position, as shown in Figs. 8C, 8D and 10. In the release position the latches 806 are closer to a vertical centreline C of the lifting frame 802 than in the connected position. When moving from the release position to the connected position, the latches 806 are moved away from the vertical centreline C and are configured to extend through the connecting recesses 510 in the side wall 508 of a stacker frame 500.

The latches 806, when engaged with connecting recesses 510, are positioned within an interior space of the stacker frame 500. This is particularly advantageous as the space provided between adjacent columns 102 of the grid 100 can be reduced as the lifting device 800 requires no clearance outside of the stacker frame 500.

Figs. 11 and 12 show a lifting device 1100 for lifting storage containers 504 out of stacker frames 500. The lifting device 1100 may be provided as the lifting device 304 of container-handling vehicle 202 or the lifting device 312 of container-handling vehicle 204. It may also be used in the lifting device of any of the robots 1300, 1800 and 1900 described below. The lifting device 1100 is configured to engage a storage container 504 for lifting or lowering the storage container 504 relative to a stacker frame 500 in which the storage container 500 is stored.

The lifting device 1100 may comprise a lifting frame 1102 connected to lifting bands 1104, which are windable/winchable from at least one lifting shaft (not depicted) of the container-handling vehicle 202, 204 to lift or lower the lifting frame 1102. The lifting frame 1102 comprises a horizontal element, as depicted, and grippers 1106 arranged on the lifting frame 1102. The grippers 1106 are configured to releasably engage connecting recesses 514 arranged in an upper rim of a storage container 504 as illustrated in Figs. 6A, 6C, 7A and 7B. The grippers 1106 comprise two or more elements movable relative to one another to provide a gripping force.

Container-handling vehicles 202, 204 may be configured to retrieve a storage container 504 via an open top end 502 of a stacker frame 500, as shown for example in Fig. 12. In this figure the uppermost stacker frame 500 in Fig. 12 has a cut-away section to better illustrate the stacking of the storage containers 504 inside the stacker frame 500. The topmost container 504 has been lifted out of the top most stacker frame 500 by container-handling vehicle 202.

To enable a storage container 504 to be retrieved from a stacker frame 500 in this way, the lifting frame 1102 has an outer periphery configured to fit within an inner periphery of the side walls of the stacker frame 500. The inner periphery of the side walls of the stacker frame 500 may be configured to guide the lifting frame 1102 when within the stacker frame 500.

Example lifting mechanisms to enable a container-handling vehicle to lift a stacker frame 500 or container 504 from a stacker frame have been described with reference to Figures 8A-12. However, it will be appreciated that these mechanisms are merely exemplary. Other mechanisms can be used, and both stacker frames 500 and containers 504 may be modified appropriately to accommodate an alternative form of lifting mechanisms.

### Lifting devices

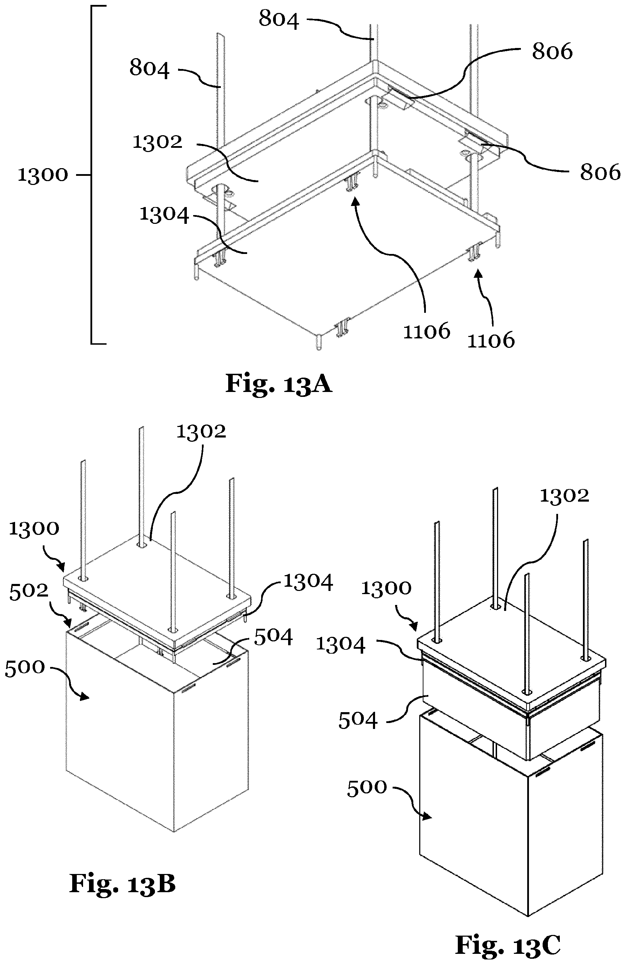

Fig. 13A shows an example lifting device 1300 comprising two lifting frames, a first lifting frame 1302 and a second lifting frame 1304. The first lifting frame comprises a horizontal element with latches 806 as arranged at its periphery to releasably engage with connecting recesses 510 on an inner surface of a stacker frame 500 (not shown in Fig. 13A). The first lifting frame 1302 of this example is not coupled to a lifting frame displacement device but instead rests upon the second lifting frame 1304 which itself is coupled to a lifting frame displacement device (not shown in Fig. 13A) via lifting bands 804. The second lifting frame comprises a further horizontal element and a plurality of grippers 1106 as grip elements projecting downwards from its edges, arranged to releasably engage with connecting recesses 514 arranged in an upper rim of a storage container 504 as illustrated in Figs. 6A, 6C, 7A and 7B. The second lifting frame 1304 has a smaller cross-section than the first lifting frame 1302 and is shaped to pass into a stacker frame 500 to access storage containers 504 within the stacker frame 500. The first lifting frame 1302 is shaped to abut the top 502 of a stacker frame 504 when lowered. The lifting bands 804 are arranged to pass through the first lifting frame 1302 to the lifting frame displacement device. The first lifting frame 1302 in engagement with the multi-container frame or stacker frame 500 allows better alignment of the second lifting frame 1304 with a storage container within the stacker frame 500.

Fig. 13B and Fig. 13C shows a sequence of the lifting device 1300 of Fig. 13A lifting a storage container 504 from a stacker frame 500. The lifting device 1300 is positioned above a stacker frame 500 containing a storage container 504. The lifting device 1300 is lowered onto the stacker frame 500. The first lifting frame 1302 abuts the stacker frame 500 at a top surface of the stacker frame 502, and the second lifting frame 1304 continues to be lowered into the stacker frame 500 towards a storage container 504. The second lifting frame 1302 engages with a storage container 504 within the stacker frame 500 before the lifting device 1300 is withdrawn, lifting the storage container 504.

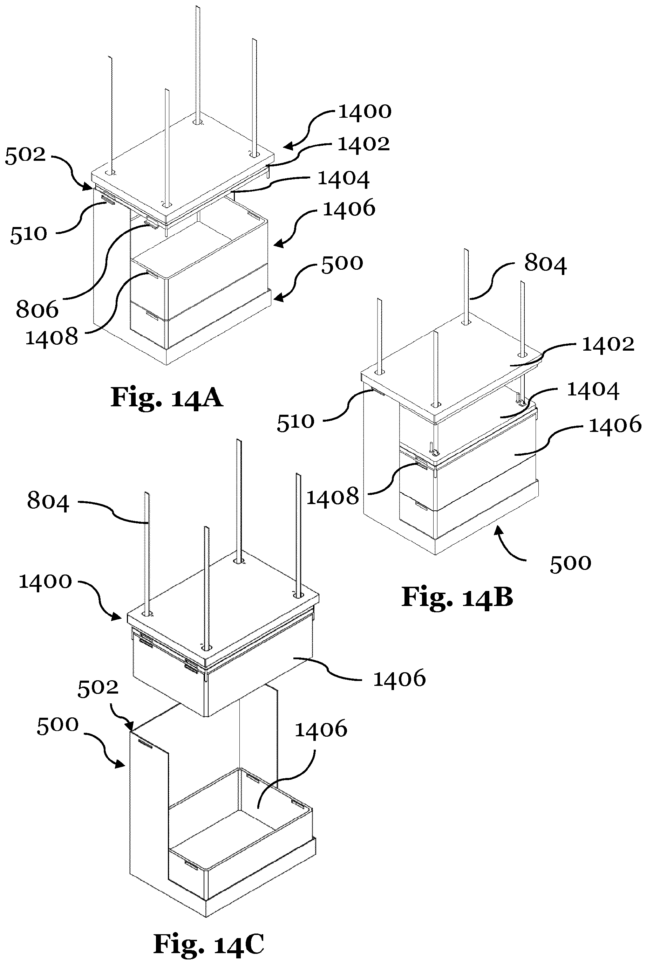

Fig. 14A shows an example lifting device 1400 comprising a first lifting frame 1402 and a second lifting frame 1404. The second lifting frame 1404 of the lifting device 1400 is shown in engagement with the top end 502 of a stacker frame 500 via latches 806 engaging with connecting recesses 510. With the latches 806 engaged in this way, the lifting device 1400 is able to lift the stacker frame 500. The stacker frame 500 is shown with a cutaway revealing multiple storage containers 1406 within the stacker frame.

Fig. 14A also shows an example storage container 1406, comprising connecting recesses 1408 configured to be engaged by latches 806. The connecting recesses 1408 of storage containers 1406 are configured such that they may be engaged by the same latches 806 as the stacker frame 500.

Fig. 14B and Fig. 14C show a sequence of the lifting device 1400 lifting a storage container 1406 from within a stacker frame 500. The first lifting frame 1402 comprises a horizontal element and does not comprise latches or grippers, in contrast to the second lifting frame 1404 comprising a horizontal element and latches 806 configured to engage with both a storage container 1406 and a stacker frame 500 by connecting recesses 510 in the stacker frame or connecting recesses 1408 in the storage containers 1406. Lifting bands 804 are arranged to pass through the first lifting frame 1402 to the second lifting frame 1404 from a lifting frame displacement device (not shown in Figs 14A to 14B).

In Fig. 14B, the second lifting frame 1404 has been lowered into a stacker frame 500 and the first lifting frame 1402 has engaged the stacker frame 500 by abutting the top end 502 of the stacker frame 500. The engagement of the stacker frame 500 by the first lifting frame 1402 assists in alignment of the second lifting frame 1404 with a storage container 1406 within the stacker frame 500. The latches 806 of the second lifting frame 1404 are engaging with connecting recesses 1408 in the storage container 1406 enabling the second lifting frame 1404 to lift the storage container 1406.

In Fig. 14C, the lifting frame 1400 is shown lifting a storage container 1406 out of the stacker frame 500. The second lifting frame 1404 has been retracted by retracting the lifting bands 804 to abut the first lifting frame 1402 and lift both the storage container 1406 and the first lifting frame 1402 out of the stacker frame 500. The connecting recesses 1408 in the storage container 1406 are aligned with both the connecting recesses 510 of the stacker frame 500 and the latches 806 of the second lifting frame 1404 such that the second lifting frame 1404 is able to engage either the stacker frame 500 or the storage container 1406 using latches 806.

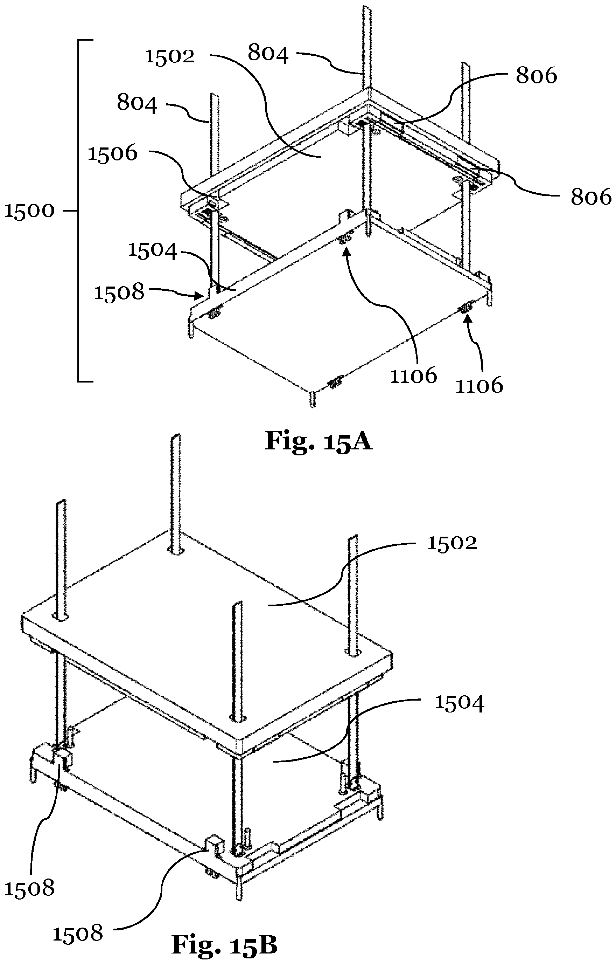

Fig. 15A shows an example lifting device 1500, comprising a first lifting frame 1502 and a second lifting frame 1504. As with the lifting device of Fig. 13A, the first lifting frame 1502 comprises a horizontal element and latches arranged to engage with connecting recesses 510. The first lifting frame 1502 is provided with recesses 1506 on its lower face configured to accept actuators 1508 arranged on the top of the second lifting frame 1504. The second lifting frame comprises a horizontal element and grippers 1106 projecting from the bottom surface, arranged to engage with connecting recesses 514 in the upper rim of a storage container 504. The second lifting frame is provided with actuators 1508 arranged to actuate the grippers 1106 and further arranged such that when the actuators 1508 are within the recesses 1506 of the first lifting frame 1502, the actuators also actuate the latches 806 of the first lifting frame. The second lifting frame is couped to a lifting frame displacement device (not shown in Fig. 15A) via lifting bands 804.

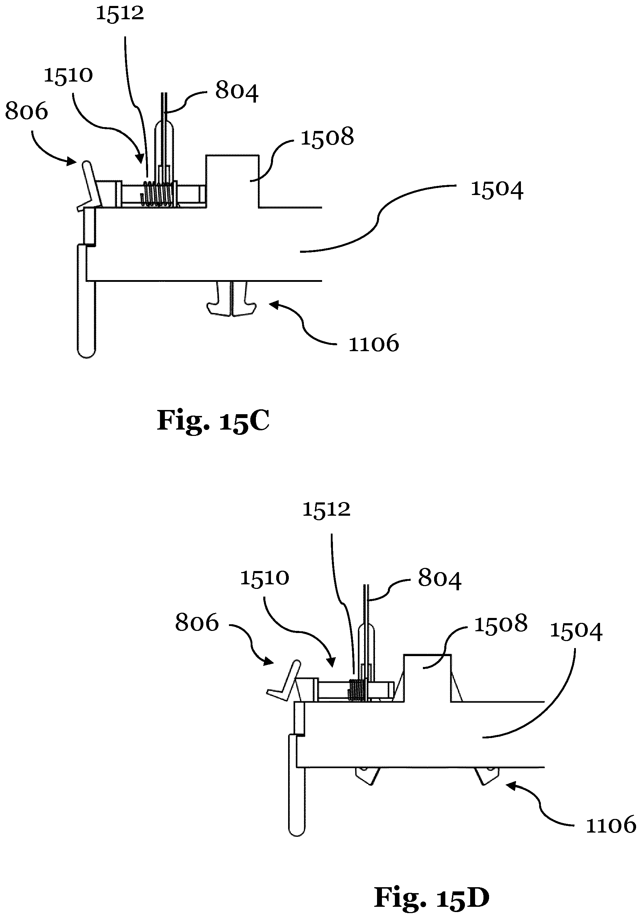

Fig. 15C and Fig. 15D show an example mechanical coupling 1510 between an actuator 1508 of the second lifting frame of Fig. 15A and a latch 806 of the first lifting frame 1502 (the first lifting frame 1502 is not shown in Fig. 15C to Fig. 15D) in an unengaged position (Fig. 15C), and engaged position (Fig. 15D) respectively. In the unengaged position, the latch 806 is inwardly biased relative to a centre of the lifting device 1500 such that it does not engage with any connecting recesses. The mechanical connection 1510 is biased by biasing means 1512, such as a spring, towards the centre of the lifting device 1502 to abut the actuator 1508. In some implementations, the latch 806 may be coupled to the mechanical connection 1510 and inwardly biased by biasing means 1512. In such implementations, the latch 806 is not separately biased towards the centre of the lifting device. The gripper 1106 of the second lifting frame 1504 is in an unengaged position in Fig. 15C. The second lifting frame 1504 is shown supported by lifting band 804.

Fig. 15D shows that when the actuator 1508 is engaged, the gripper 1106 extends to an engaged position and urges the mechanical connection 1510 against the latch 806, causing the latch 806 to adopt an engaged position. Thus both the latch 806 and gripper 1106 may be engaged by a single actuator 1508 when the first lifting frame 1502 and second lifting frame 1504 abut one another. As shown in Fig. 15D, the latch 806 is in an engaged position when the latch 806 is urged away from a centre of the lifting device 1502. When the frames do not abut one another, the latch 806 is not actuatable by the actuator 1508 whereas the gripper 1106 remains actuatable. In some example implementations actuators 1508 provided on a third lifting frame may be similarly configured to actuate the latches or other grip elements of the first lifting frame.

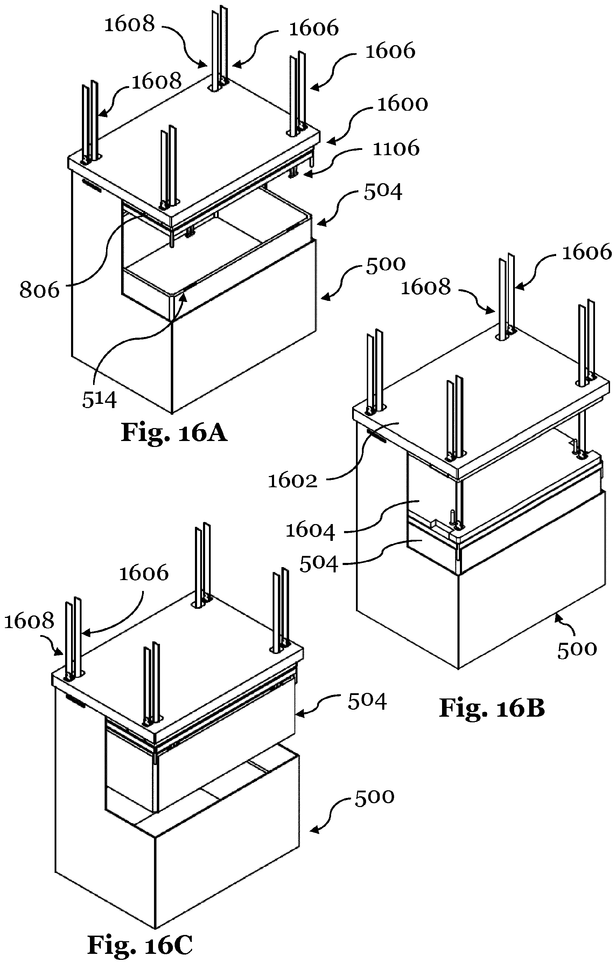

Fig. 16A, Fig. 16B and Fig. 16C show a sequence of an example lifting frame 1600 lifting a storage container 504 from within a stacker frame 500, where the stacker frame is shown in cutaway to expose the operation of the second lifting frame 1604. The example lifting device 1600 is configured to be connected to two lifting frame displacement devices (not show in Figs. 16A to 16 C). The first lifting frame 1602 is coupled to a first lifting frame displacement device via lifting bands 1606, and the second lifting frame 1604 is coupled to a second lifting frame displacement device via lifting bands 1608. Each of the two frames is connected to alternative lifting frame displacement devices such that the two lifting frames can be independently lifted and lowered.

Fig. 16B shows the second lifting frame 1604 lowered within the stacker frame 500 to engage with a storage container 504. The grippers 1106 on the second lifting frame are arranged to engage the storage container 504 via connecting recesses 514 in the upper rim of the storage container 504. Fig. 16C shows the storage container 504 lifted by the second lifting frame 1604 before the lifting device 1600 is lifted away from the stacker frame 500 by both sets of lifting bands 1606 and 1608.

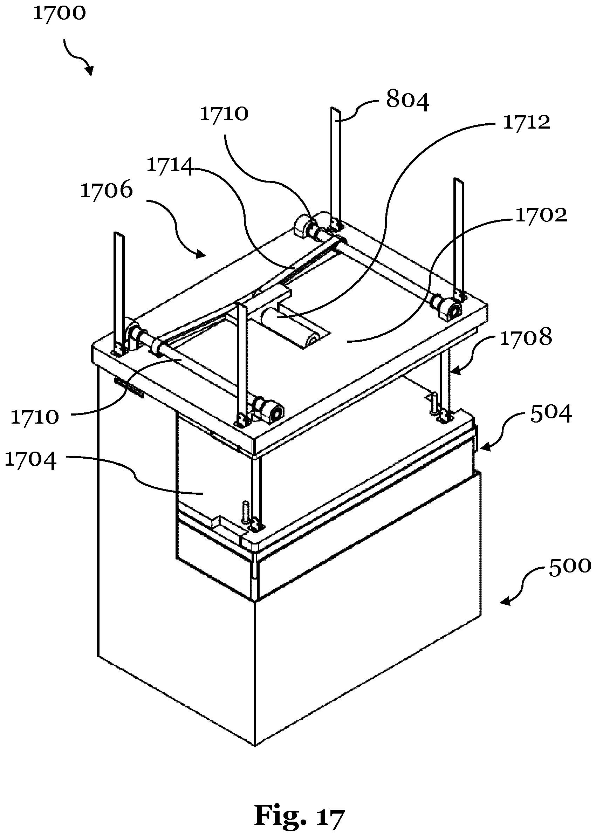

Fig. 17 shows an example lifting device 1700 comprising a first lifting frame 1702 and a second lifting frame 1704 coupled to a second lifting frame displacement device 1706 via second lifting bands 1708. The lifting frame displacement device 1706 comprises two parallel lifting shafts 1710 that are spaced apart from each other. The lifting shafts 1710 are configured to wind up or unwind the second lifting bands 1708 and are each coupled with a lifting motor 1712 through a belt 1714. By rotating the lifting motor 1712, the belts 1714 are driven. The belts 1714 drive the lifting shafts 1710 to wind up or unwind the second lifting bands 1708. In this manner, the second lifting frame 1704 and any stacker frame 500 coupled to it is lifted or lowered.

The second lifting frame 1704 is shown engaged with a storage container 504 within a stacker frame 500, where the stacker frame 500 is shown with a cutaway to expose the second lifting frame 1704 and the storage container 504. The first lifting frame 1702 is coupled to a first lifting frame displacement device (not shown) via lifting bands 804. Providing a second lifting frame displacement device 1706 on the first lifting frame 1702 allows for a shorter length of second lifting bands 1708 as compared to the lifting bands 804 given the proximity of the second lifting frame displacement device 1706 to the second lifting frame 1704. The reduced length of the second lifting bands 1708 reduces weight and storage volume required when the second lifting bands 1708 are retracted.

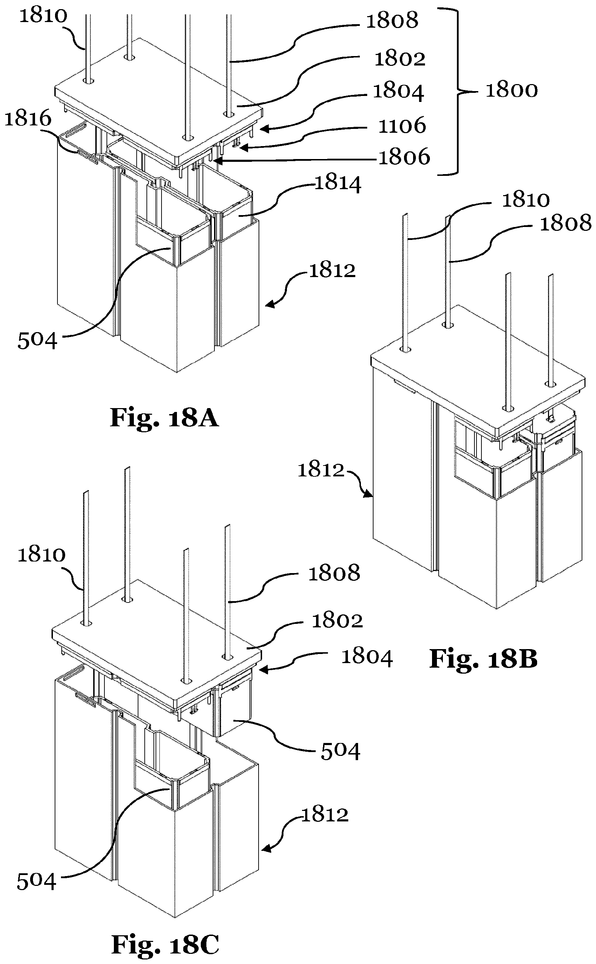

Fig. 18A, Fig. 18B and Fig. 18C show a sequence of an example lifting device 1800 comprising a first lifting frame 1802, a second lifting frame 1804 and a third lifting frame 1806, lifting an example storage container 1814 from an example stacker frame 1812. The stacker frame 1812 is shown with a cutaway to expose the storage containers 1814 and operation of the lifting device 1800. The stacker frame 1812 is configured to store storage containers 1814 side-by-side, such that the lifting device 1800 can access either storage container from above. Storage containers 1814 are configured to be stored side-by-side within stacker frame 1812. The stacker frame 1812 comprises connecting recesses 1816 at a top end of the stacker frame 1812.First lifting frame 1802 comprises a horizontal element, as depicted, and is shaped to abut an upper surface of a stacker frame 1812. The second lifting frame 1804 is positioned beneath the first lifting frame 1802 and alongside the third lifting frame 1806. Such an arrangement ensures that each of the second lifting frame 1804 and the third lifting frame 1806 does not interfere with the other when each frame is lifted or lowered. The second lifting frame 1804 and third lifting frame 1806 may therefore independently engage and lift separate storage containers 1814 without impeding each other, allowing a greater range of combinations of storage containers 1814 and/or stacker frames 1812 that can be lifted simultaneously by a lifting device. The second lifting frame 1804 and the third lifting frame 1806 each comprise horizontal elements, as depicted, and grippers 1106 arranged to engage with storage containers 504. Each of the second lifting frame 1804 and the third lifting frame 1806 are coupled to first and second lifting frame displacement devices (not shown) via first lifting bands 1808 and second lifting bands 1810.

Fig. 18B shows the lifting device 1800 in engagement with both a stacker frame 500 and a storage container 504. The first lifting frame 1802 abuts the stacker frame 500 whilst the second lifting frame is lowered to a storage container 504 within the stacker frame 500. Fig. 18C shows the lifting device 1800 lifting the storage container 504 from the stacker frame 500. The second lifting frame 1804 is lifted by the first lifting frame displacement device until it is alongside the third lifting frame 1806 and both the third and second lifting frames 1804, 1806 are abutting the first lifting frame 1802. The first and second lifting frame displacement devices then lift the second and third lifting frames 1804, 1806 and as a result the first lifting frame 1802 which is supported by the second and third lifting frames when lifted from the stacker frame 500. In some example implementations the first lifting frame 1802, second lifting frame 1804 and/or the third lifting frame 1806 comprise latches 806 configured to engage connecting recesses 1816 in the stacker frame 1812. In some example implementations, grippers 1106 may be provided instead of latches 806.

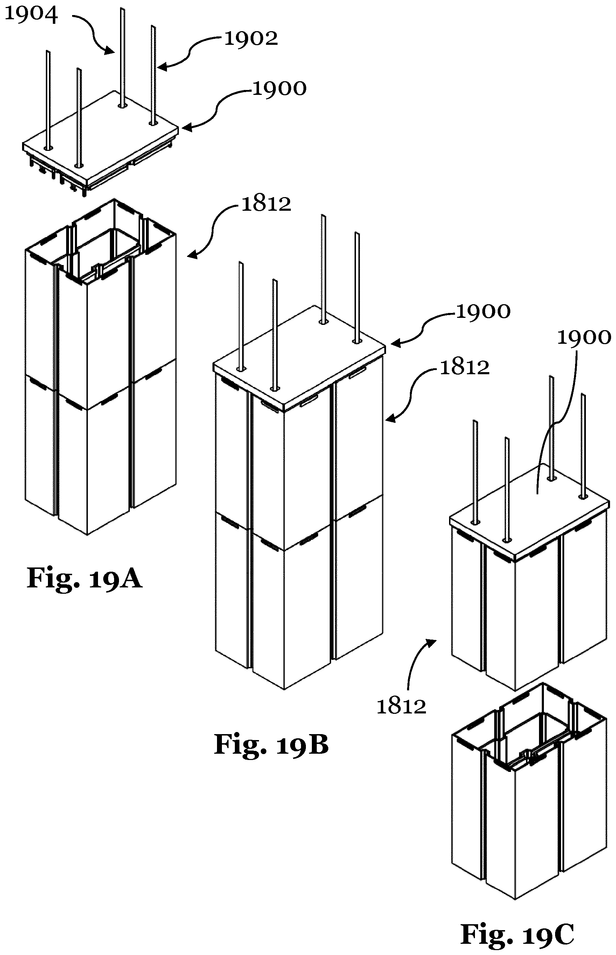

Fig. 19A, Fig. 19B and Fig. 19C show a sequence of an example lifting device 1900 lifting a stacker frame 1812. The lifting device 1900 is supported and lowered by lifting bands 1902, 1904 onto a stacker frame 1812. The lifting device engages with the stacker frame in Fig. 19B, and when the lifting device is lifted by the lifting bands 1902, 1904 the stacker frame is lifted as shown in Fig. 19C. In some example implementations the lifting device 1900 comprises latches 806 for engaging with connecting recesses 1816 of the stacker frame 1812. In some example implementations, grippers 1106 may be provided instead of latches 806.

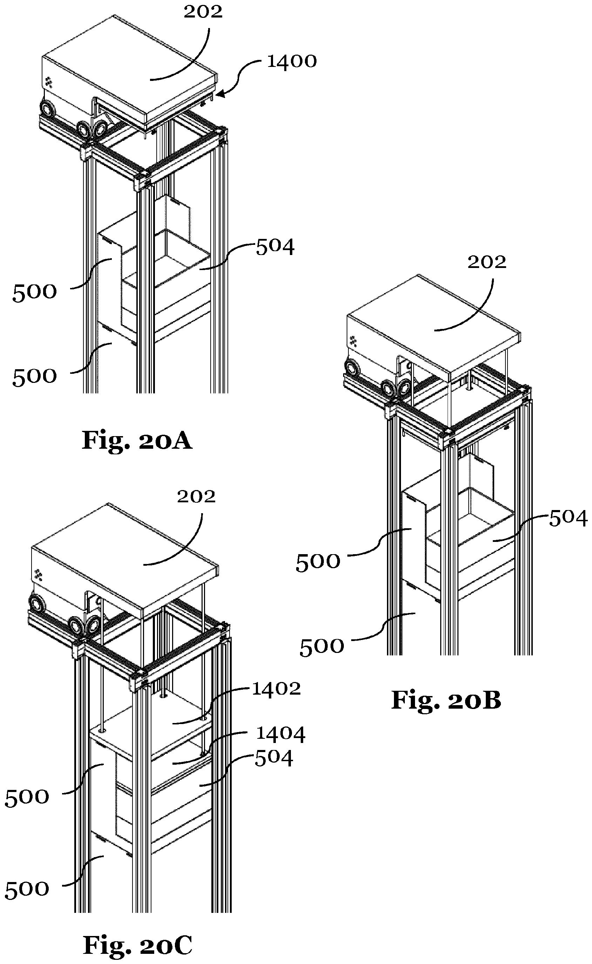

Fig. 20A, Fig 20B and Fig. 20C show a system of a lifting device 1400 of Fig. 14A as described in detail above combined with a robotic container-handling vehicle 202. In some example implementations, the lifting device 1400 may be combined with robot container-handling vehicle 204 or any suitable container-handling device for use with an automated storage and retrieval system grid 100. In some example implementations, any lifting device as described above may be combined with any suitable container-handling device for use with an automated storage and retrieval system grid 100. The system is shown in a sequence from Fig.20A - Fig. 20C engaging with a storage container 504. A stacker frame 500 is shown with a cutaway to expose the storage containers 504 within.

The lifting device 1400 is lowered towards a stacker frame 500 or storage container 504, as shown in Fig. 20B. In Fig. 20C the first lifting frame 1402 abuts an upper surface of the stacker frame 504 and the second lifting frame 1406 descends within the stacker frame 500 to engage with a storage container 504.

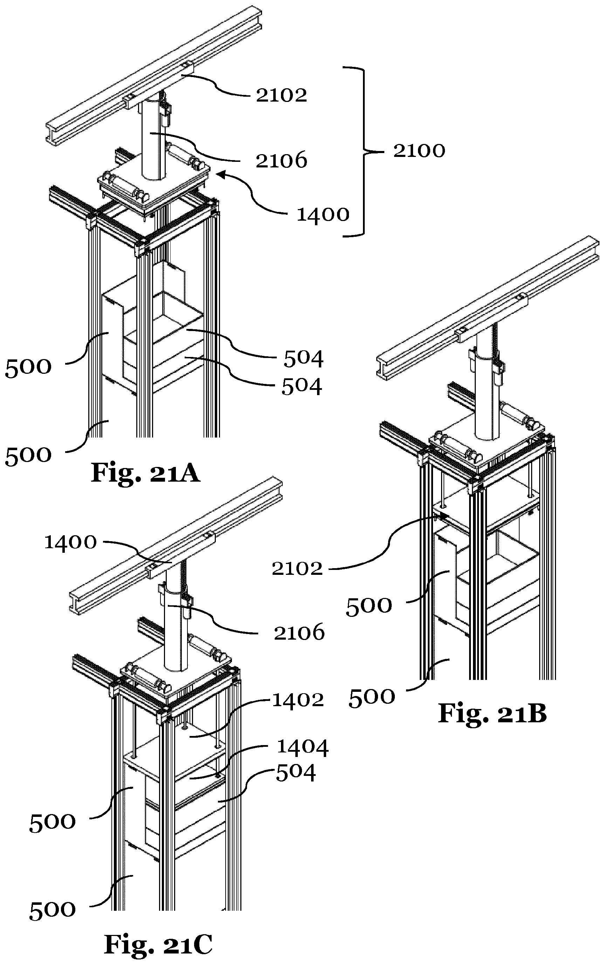

Fig. 21A, Fig. 21B and Fig. 21C show a system comprising a crane and a lifting device 1400 of Fig. 14A. The crane 2100 comprises a movable platform 2102 slidably mounted to a gantry 2104, a telescopic arm 2106, and a lifting device 1400 of Fig. 14A. In some example implementations, any lifting device as described above may be combined with any suitable crane for use with an automated storage and retrieval system grid 100. A stacker frame 500 is shown with a cutaway to expose the storage containers 504 within.

The lifting device is lowered towards a stacker frame 500 or storage container 504, as shown in Fig. 21B. In Fig. 21C, the first lifting frame 1402 abuts an upper surface of the stacker frame 504 and the second lifting frame 1406 descends within the stacker frame to 500 to engage with a storage container 504.

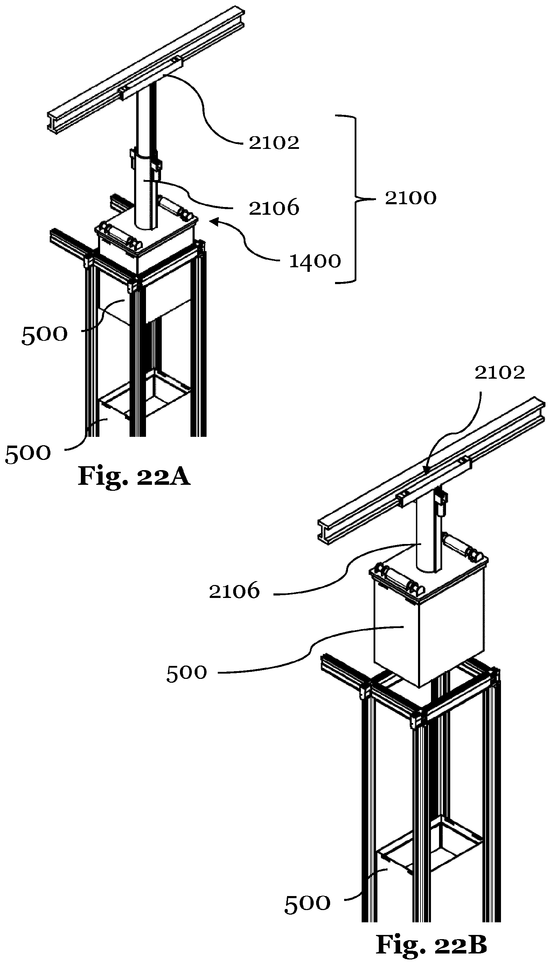

Fig. 22A shows the crane system 2100 of Fig. 21A when the telescopic arm 2106 is extended to lower the lifting device 1400 towards a storage column. The lifting device 1400 is engaged with a stacker frame 500, lifting the stacker frame 500 from the storage column. In Fig. 22B the telescopic arm 2106 is retracted such that the stacker frame 500 is lifted clear of the storage column.

### Penultimate comments

The second lifting frame may, in some example implementations, be arranged below the first lifting frame. Such an arrangement allows the second lifting frame to access and engage storage containers within a multi-container frame while the first lifting frame is engaged with the multi-container frame, advantageously improving stability of the lifting device when lifting a storage container from within the stacker frame.

In some example implementations the second lifting frame is movable relative to the first lifting frame, and able to be lowered into a stacker frame independently of the first lifting frame. When the first lifting frame is engaged with the stacker frame, this relative movement allows the second lifting frame to lift storage containers stacked at a variety of heights within the multi-container frame whilst maintaining engagement of the stacker frame by the first lifting frame.

In some example implementations, engagement of a multi-container frame by the first lifting frame is achieved by the first lifting frame abutting the multi-container frame. When lowering the second lifting frame into the stacker frame, the engagement of the stacker frame by the first lifting frame enables better alignment of the second lifting frame with a storage container within the multi-container frame.

In some example implementations, the first lifting frame comprises a first grip element configured to engage with a surface of a multi-container frame, providing a stable and reversible connection between the first lifting frame and the multi-container frame. In some example implementations, the first lifting frame comprises two or more first grip elements to further provide a stable and reversible connection between the first lifting frame and the multi-container frame.

In some example implementations, the first grip element may comprise a latch configured to engage with a recess in the surface of a multi-container frame such as a stacker frame. A latch provided in a recess is able to exert force on the sides of the recess thereby restricting unwanted relative movement between the latch and the recess, and therefore between the first lifting frame and the multi-container frame. This allows for better stability during lifting of a multi-container frame. In some example implementations the first lifting frame comprises two or more latches, thereby further reducing unwanted relative movement between the first lifting frame and the multi-container frame.

In some example implementations, the first grip element may comprise a first gripper configured to engage with a recess provided in a surface of the multi-container frame facing the first lifting frame. The gripper can thereby engage with a multi-container frame where there is no free space for a latch either side of the walls of the multi-container frame or storage container. In some example implementations the first lifting frame comprises two or more grippers. Two or more grippers may better distribute the load of a multi-container frame on the first lifting frame, reducing any unwanted relative movement between the first lifting frame and the multi-container frame.

In some example implementations, the first grip element is actuatable to engage with a multi-container frame. An actuatable grip element such as an actuatable latch or actuatable gripper allows reversible engagement between the first lifting frame and a multi-container frame and further allows reversible engagement when the lifting device is in use and remote from a user.

In some example implementations, the second lifting frame comprises a second grip element configured to engage with a surface of a storage container and/or multi-container frame. Such a second grip element thereby provides stable and reversible connection between the second lifting frame and a storage container and/or multi-container frame. In some example implementations, the second lifting frame comprises two or more second grip elements to further provide a stable and reversible connection between the second lifting frame and the storage container and / or multi-container frame.

In some example implementations, the second grip element comprises a latch configured to engage with a recess in the surface of the storage container and/or multi-container frame. A latch provided in a recess is able to exert force on the sides of the recess thereby restricting unwanted relative movement between the latch and the recess, and therefore between the second lifting frame and the storage container and/or multi-container frame. In engaging with a recess, the second grip element may allow for better stability during lifting of a storage container and/or multi-container frame. In some example implementations the second lifting frame comprises two or more latches, thereby further reducing unwanted relative movement between the second lifting frame and the storage container and/or multi-container frame.

In some example implementations, the second grip element comprises a second gripper configured to engage with a recess provided in a surface of the storage container facing the second lifting frame. Such a second gripper can thereby engage with a storage container where there is no free space for a latch either side of the walls of the storage container. In some example implementations the second lifting frame comprises two or more grippers. Two or more grippers may better distribute the load of a storage container on the second lifting frame, reducing any unwanted relative movement between the second lifting frame and the storage container.

In some example implementations, the second grip element is actuatable to engage with a storage container and/or a multi-container frame. An actuatable grip element such as an actuatable latch or actuatable gripper allows reversible engagement between the second lifting frame and a storage container and/or multi-container frame, and further allows reversible engagement when the lifting device is in use and remote from a user.

In some example implementations, at least one actuator is configured to actuate the first and/or second grip element. In some example implementations, a single actuator may actuate both the first grip element of the first lifting frame and the second grip element of the second lifting frame, reducing the complexity of the device and reducing the number of parts required, thus reducing the cost of manufacture. In some example implementations, a first actuator is configured to actuate the first grip element and a second actuator is configured to actuate a second grip element, allowing separate control of the first and second grip element. Such an arrangement of first and second actuators allows a lifting device to engage storage containers and multi-container frames simultaneously when the first lifting frame is engaged with a multi-container frame, without a mechanical coupling between the first and second lifting frames.

In some example implementations, the actuator is provided on the second lifting frame and configured to actuate both the first grip element and the second grip element when the first and second lifting frame abut one another. In some example implementations, abutment of the first and second lifting frames forms a mechanical coupling between the actuator and the first grip element of the first lifting frame, simplifying the mechanical connection.

In some example implementations the lifting device further comprises a first lifting frame displacement device and a first coupling, such as a lifting belt, between the first lifting frame displacement device and the first lifting frame and/or the second lifting frame. In some example implementations the first coupling is between the first lifting frame and the first lifting frame displacement device, and the first lifting frame is coupled to the second lifting frame to support the second lifting frame. In some example implementations, the first coupling is between the second lifting frame and the first lifting frame displacement device and the first lifting frame displacement device is supported by an upper surface of the second lifting frame when the second lifting frame is lifted away from a multi-container frame. Using only one lifting frame displacement device reduces weight of the lifting device, particularly when the lifting frame displacement device is coupled to the second lifting frame supporting the first lifting frame.

In some example implementations, the first lifting frame displacement device is configured to be mounted on any of a robotic container-handling vehicle or a crane. The lifting frame can thereby be translated above the automated storage and retrieval system, facilitating movement of storage containers and/or multi-container frames.

In some example implementations, the lifting device further comprises a second lifting frame displacement device and a second coupling, such as a lifting belt, where the first coupling is between the first lifting frame and the first lifting frame displacement device, and the second coupling is between the second lifting frame displacement device and the second lifting frame. Each lifting frame is displaceable independently to the other lifting frame by a respective lifting device, allowing the lifting device to lift different combinations of storage containers and multi-container frames. If the coupling is a lifting belt, the lifting belt can be wound when retracted thereby saving storage volume.

In some example implementations, the second lifting frame displacement device is configured to be mounted on any of a robotic container-handling vehicle or a crane. In example implementations, the first lifting frame displacement device and the second lifting frame displacement device may be mounted on the same robotic container-handling vehicle or crane. The lifting frame displacement devices are stabilised by being attached to the same robotic container-handling vehicle or crane, such that guidance of the lifting frames to a multi-container frame or storage container is more achievable. Such example implementations also allow the lifting device to be more readily translated above the automated storage and retrieval system.

In some example implementations, the second lifting frame displacement device is provided on the first lifting frame. In some example implementations the second lifting frame is configured to access storage containers within a multi-container frame, and therefore the minimum length of the coupling between the second displacement device and the first displacement device can be reduced to only the maximum depth of a multi-container frame, reducing weight of the device. This advantage is conferred particularly over other implementations listed above with a plurality of lifting frame displacement devices, each mounted on a robotic container-handling vehicle or crane.

In some example implementations, the coupling between the second lifting frame, first lifting frame displacement device and/or second lifting frame displacement device is arranged to pass through the first lifting frame. By permitting the coupling between the second lifting frame and the second lifting frame displacement device through the first lifting frame, the second lifting frame may be located beneath the first lifting frame in implementations where the first lifting frame is larger than the second lifting frame.

In some example implementations the lifting device further comprises a third lifting frame configured to engage with a storage container arranged with a multi-container frame. The third lifting frame enables the device to lift two storage containers from within the same multi-container frame.

In some example implementations, the third lifting frame is arranged alongside the second lifting frame. In some example implementations, the third lifting frame is arranged alongside the second lifting frame such that each frame does not interfere with the other when each frame is lifted or lowered. The second and third lifting frames may therefore independently engage separate storage containers and lift the containers without impeding each other, allowing a greater range of combinations of containers and/or multi-container frames that can be lifted simultaneously by a lifting device.

In some example implementations, the third lifting frame is arranged below the first lifting frame. Such an arrangement allows the third lifting frame to access and engage storage containers within a multi-container frame while the first lifting frame is engaged with the multi-container frame, advantageously improving stability of the lifting device when lifting a storage container from within the stacker frame..

In some example implementations, the third lifting frame is movable relative to the first lifting frame and/or the second lifting frame. Either or both of the second or third lifting frame may be moveable relative to the first lifting frame, in addition to being independent of one another, allowing the lifting device to lift different combinations of storage containers and multi-container frames.

In some example implementations, the third lifting frame comprises a third grip element configured to engage with a surface of a storage container. The third grip element provides stable and reversible connection between the third lifting frame and a storage container. In some example implementations, the third lifting frame comprises two or more third grip elements to further provide a stable and reversible connection between the third lifting frame and the storage container and / or multi-container frame.

In some example implementations, the third grip element comprises a latch configured to engage with a recess provided on a surface of a storage container. A latch provided in a recess is able to exert force on the sides of the recess thereby restricting unwanted relative movement between the latch and the recess, and therefore between the third lifting frame and the storage container. In engaging with a recess, the third grip element may allow for better stability during lifting of a storage container. In some example implementations the third lifting frame comprises two or more latches, thereby further reducing unwanted relative movement between the third lifting frame and the storage container.

In some example implementations, the third grip element comprises a third gripper configured to engage with a recess provided in a surface of the storage container facing the third lifting frame. Such a third gripper can engage with a storage container where there is no free space of a latch either side of the walls of the storage container. In some example implementations third lifting frame comprises two or more grippers. Two or more grippers may better distribute the load of a storage container on the third lifting frame, reducing any unwanted relative movement between the third lifting frame and the storage container.

In some example implementations, the third grip element is actuatable to engage with a storage container. An actuatable grip element such as an actuatable latch or actuatable gripper allows reversible engagement between the third lifting frame and a storage container, and further allows reversible engagement when the lifting device is in use and remote from a user.

In some example implementations, the third lifting frame further comprises at least one actuator configured to actuate the first and/or third grip element. In some example implementations a single actuator may actuate both the first grip element of the first lifting frame and the second grip element of the second lifting frame, reducing the complexity of the device and reducing the number of parts required, thus reducing the cost of manufacture. In some example implementations, a first actuator is configured to actuate the first grip element and a third actuator is configured to actuate a third grip element, allowing separate control of the first and third grip element. Such an arrangement of first and third actuators allows a lifting device to engage storage containers and multi-container frames simultaneously when the first lifting frame is engaged with a multi-container frame, without a mechanical coupling between the first and second lifting frames.

In some example implementations, the actuator is provided on the third lifting frame and configured to actuate both the first grip element and the third grip element when the first and third lifting frames abut one another. In some example implementations, abutment of the first and second lifting frames forms a mechanical coupling between the actuator and the first grip element of the first lifting frame, simplifying the mechanical connection.

In some example implementations, the lifting device further comprises a third lifting frame displacement device and a third coupling, such as a lifting belt, between the third lifting frame displacement device and the third lifting frame. In some example implementations where the first lifting frame or second lifting frame are coupled to a first lifting frame displacement device via a first coupling, the third lifting frame may be displaceable independently to both the first lifting frame and the second lifting frame, allowing lifting of different storage containers which maybe at different heights within the multi-container frame. If the coupling is a lifting belt, the lifting belt can be wound when retracted thereby saving storage volume.

In some example implementations, the third lifting frame displacement device is configured to be mounted on any of a robotic container-handling vehicle or a crane. In example implementations, the first lifting frame displacement device and the third lifting frame displacement device may be mounted on the same robotic container-handling vehicle or crane. At least the first and/or third of the three displacement devices are stabilised by being attached to the same container-handling vehicle, such that guidance of the third lifting frame to a multi-container frame or storage container is more achievable.

In some example implementations, the third lifting frame displacement device is provided on the second lifting frame. In some example implementations the third lifting frame is configured to access storage containers within a multi-container frame, and therefore the minimum length of the coupling between the third displacement device and the first displacement device can be reduced to only the maximum depth of a multi-container frame, reducing weight of the device. This advantage is conferred particularly over other implementations listed above with a plurality of lifting frame displacement devices, each mounted on a robotic container-handling vehicle or crane.

In some example implementations, a coupling such as a lifting belt is arranged to pass through the first lifting frame. By permitting the coupling between the third lifting frame and the third lifting frame displacement device through the first lifting frame, the third lifting frame may be located beneath the first lifting frame in implementations where the first lifting frame is larger than the third lifting frame.

In some example implementations, a robotic vehicle for handling multi-container frames and/or storage containers, comprises a lifting device as described above. In some example implementations, the multi-container frames are configured to be stored in storage columns of an automated storage and retrieval system, and configured to accommodate a plurality of storage containers stored in an interior space of each multi-container frame. In some example implementations the robotic vehicle comprises a drive system for moving the robotic vehicle on rails of a rail system above the storage columns. In some example implementations the robotic vehicle is configured to operate the lifting device to lift a multi-container frame and/or storage container from a storage column, such that a bottom of the multi-container frame and/or storage container is lifted above the rails of the rail system to allow the robotic vehicle to move freely on the rails of the rail system while carrying one or more multi-container frames and/or storage containers. In some example implementations the lifting device can be used with a robotic vehicle that can navigate a storage and retrieval system to lift and transport multi-container frames and/or storage containers. One vehicle being able to handle two dimensions of containers gives the system more flexibility, and in situations where there is no need for digging, a vehicle equipped with a lifting device as described above can be used to retrieve any type of container as needed, thus optimizing the utilization of the available resources. In addition, this system allows low throughput systems to only use one container handling vehicle type.

In some example implementations, a crane assembly for handling multi-container frames and/or storage containers comprises a lifting frame as described above. In some example implementations the multi-container frames are configured to be stored in storage columns of an automated storage and retrieval system and configured to accommodate a plurality of storage containers stored in an interior space of each multi-container frame. In some example implementations the crane assembly is configured to operate the lifting device to lift a multi-container frame and/or storage container from a storage column, such that a bottom of the multi-container frame and/or storage container is lifted above the storage columns and to move freely above the storage columns carrying one or more multi-container frames and/or storage containers. Such a crane assembly can be used alternatively or in addition to the robotic container-handling vehicle, the lifting device can be used with a crane assembly lift and transport multi-container frames and/or storage containers above an automated storage and retrieval system.

In some example implementations of the crane system, the crane further comprises a first gantry beam and a movable platform slidably mounted to the first gantry beam to move in a first direction, wherein the lifting device is coupled to the movable platform. The slidably mounted platform allows the lifting device to traverse the storage and retrieval system to access multi-container frames and/or storage containers.

In some example implementations of the crane system, the crane further comprises a second gantry beam, wherein the first gantry beam is slidably mounted to the second gantry beam to move in a second direction. A second gantry which can move in a second direction allows the crane to move in and X and a Y direction, traversing a greater range of the storage and retrieval system.

In some example implementations of the crane system, the crane further comprises a telescopic arm mounted between the movable platform and the lifting device, the telescopic arm configured to lower the lifting device towards the storage columns of the automated storage and retrieval system. Equipping the crane with a telescopic arm allows additional range of movement of the lifting device and lifting of the device above the storage columns without interfering with the operation of other container-handling vehicles.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A lifting device for lifting a multi-container frame and for lifting a storage container arranged in an interior space of the multi-container frame, the multi-container frames configured to be stored in storage columns of an automated storage and retrieval system, the multi-container frames configured to accommodate a plurality of storage containers stored in an interior space of each multi-container frame, the lifting device comprising:
a first lifting frame configured to engage with a multi-container frame; and
a second lifting frame configured to engage with a storage container arranged within a multi-container frame.

2. A lifting device according to claim 1,
wherein the second lifting frame is arranged below the first lifting frame.

3. A lifting device according to any preceding claim,
wherein the first lifting frame comprises a first grip element configured to engage with a surface of a multi-container frame.

4. A lifting device according to any preceding claim,
wherein the second lifting frame comprises second a grip element configured to engage with a surface of a storage container and/or multi-container frame.

5. A lifting device according to claim 4,
wherein the second grip element comprises a latch configured to engage with a recess in the surface of the storage container and/or multi-container frame.

6. A lifting device according to claim 4 or claim 5,
wherein the second grip element comprises a gripper configured to engage with a recess provided in a surface of the storage container facing the second lifting frame.

7. A lifting device according to any preceding claim,
further comprising:
a first lifting frame displacement device; and
a first coupling between the first lifting frame displacement device and the first lifting frame and/or the second lifting frame, optionally wherein the first coupling is a lifting belt.

8. A lifting device according to claim 7,
further comprising:
a second lifting frame displacement device; and
a second coupling between the second lifting frame displacement device and the second lifting frame, optionally wherein the second coupling is a lifting belt.

9. A lifting device according to claim 8,
wherein the second lifting frame displacement device is provided on the first lifting frame.

10. A lifting device according to any preceding claim,
further comprising a third lifting frame configured to engage with a storage container arranged within a multi-container frame.

11. A lifting device according to claim 10,
wherein the third lifting frame is arranged alongside the second lifting frame.

12. A lifting device according to any of claim 10 to claim 11,
wherein the third lifting frame comprises a third grip element configured to engage with a surface of a storage container.

13. A lifting device according to any of claim 10 to claim 12,
further comprising:
a third lifting frame displacement device; and
a third coupling between the third lifting frame displacement device and the third lifting frame, optionally wherein the third coupling is a lifting belt.

14. A robotic vehicle for handling multi-container frames and/or storage containers, the multi-container frames configured to be stored in storage columns of an automated storage and retrieval system, the multi-container frames configured to accommodate a plurality of storage containers stored in an interior space of each multi-container frame,
the robotic vehicle comprising:
a drive system for moving the robotic vehicle on rails of a rail system above the storage columns; and
a lifting device according to any preceding claim;
wherein the robotic vehicle is configured to operate the lifting device to lift a multi-container frame and/or storage container from a storage column, such that a bottom of the multi-container frame and/or storage container is lifted above the rails of the rail system to allow the robotic vehicle to move freely on the rails of the rail system while carrying one or more multi-container frames and/or storage containers.

15. A crane assembly for handling multi-container frames and/or storage containers, the multi-container frames configured to be stored in storage columns of an automated storage and retrieval system, the multi-container frames configured to accommodate a plurality of storage containers stored in an interior space of each multi-container frame,
the crane comprising a lifting device according to any of claim 1 to claim 13;
wherein the crane assembly is configured to operate the lifting device to lift a multi-container frame and/or storage container from a storage column, such that a bottom of the multi-container frame and/or storage container is lifted above the storage columns and to move freely above the storage columns carrying one or more multi-container frames and/or storage containers.
